# EUROPÄISCHE PATENTSCHRIFT

(11) **EP 1 707 301 B1**
(45) Veröffentlichungstag und Bekanntmachung des Hinweises auf die Patenterteilung: **18.06.2008**
(21) Anmeldenummer: 05007095.2
(22) Anmeldetag: 31.03.2005
(51) Int. Cl.: B23K 35/02, B23K 31/02, F01D 5/00, F01D 5/28, B23P 6/00, C07F 7/10, C04B 35/571, B23K 1/00

(54) **Verfahren zum Aufbringen von Fasermatten auf die Oberfläche oder in eine Vertiefung eines Bauteiles**
Process for applying fibre mats on the surface or a recess of a component
Procédé pour appliquer des mats de fibres sur la surface ou dans une cavité d'un composant

(43) Veröffentlichungstag der Anmeldung: 04.10.2006
(73) Patentinhaber: SIEMENS AKTIENGESELLSCHAFT, 80333 München (DE)
(72) Erfinder: Jabado, Rene, 14199 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE); Walter, Steffen, Dr., 85630 Harthausen (DE)

(56) Entgegenhaltungen:
- EP-A- 1 055 480
- GB-A- 1 076 958
- US-A- 3 876 447
- US-A- 4 059 712
- US-A- 5 323 954
- US-A- 5 358 674
- US-A- 5 366 943
- US-A- 5 666 643
- US-A- 5 945 362
- US-A1- 2003 196 305
- US-B1- 6 241 469

## Beschreibung

Die Erfindung betrifft ein Verfahren zum Aufbringen von Material auf ein Bauteil gemäß dem Oberbegriff der Ansprüche 1 bis 3 (siehe, z.B., US-B1-6 241 469)

Vertiefungen, die bei Bauteilen aufgefüllt werden müssen, werden oft mit einem Lot aufgefüllt, wobei das Lot jedoch geringere mechanische Kennwerte aufweist als das Grundmaterial des Bauteils.
Ein verbessertes Lot ist aus der US 5,666,643 bekannt. Die dabei verwendeten Kurzfasern erzeugen jedoch nicht den gewünschten Anstieg in der mechanischen Festigkeit.

Es ist daher Aufgabe der Erfindung, dieses Problem zu überwinden.

Die Aufgabe wird durch ein Verfahren gemäß einem der Ansprüche 1 bis 3 gelöst.

In den abhängigen Ansprüchen sind weitere vorteilhafte Maßnahmen aufgelistet, die in vorteilhafter Art und Weise beliebig miteinander verknüpft werden können.

Es zeigen
- Figur 1 bis 4,: wie erfindungsgemäß eine Vertiefung aufgefüllt wird,
- Figur 5 bis 12,: erfindungsgemäße Verfahrensschritte,
- Figur 13: eine Turbinenschaufel,
- Figur 14: eine Brennkammer und
- Figur 15: eine Gasturbine. Bauteil und Fasermatte

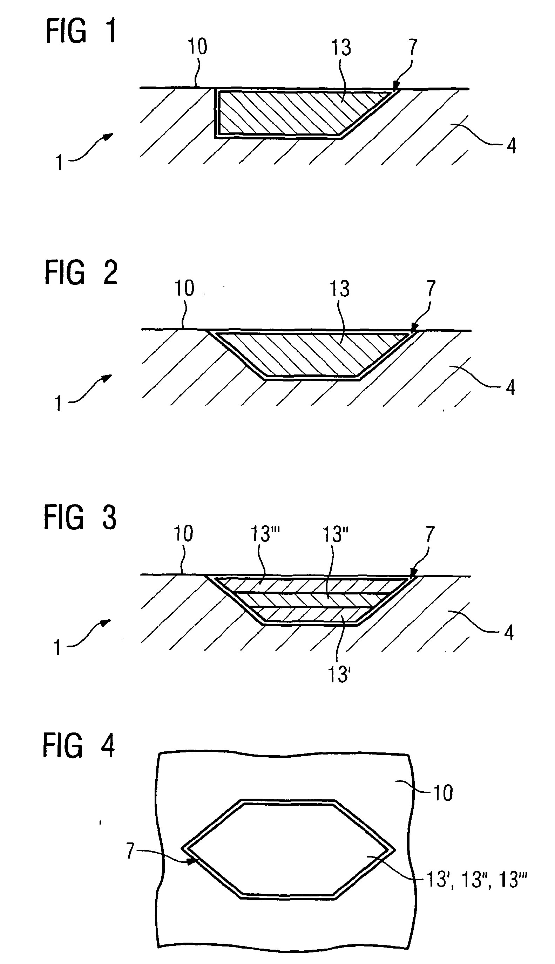

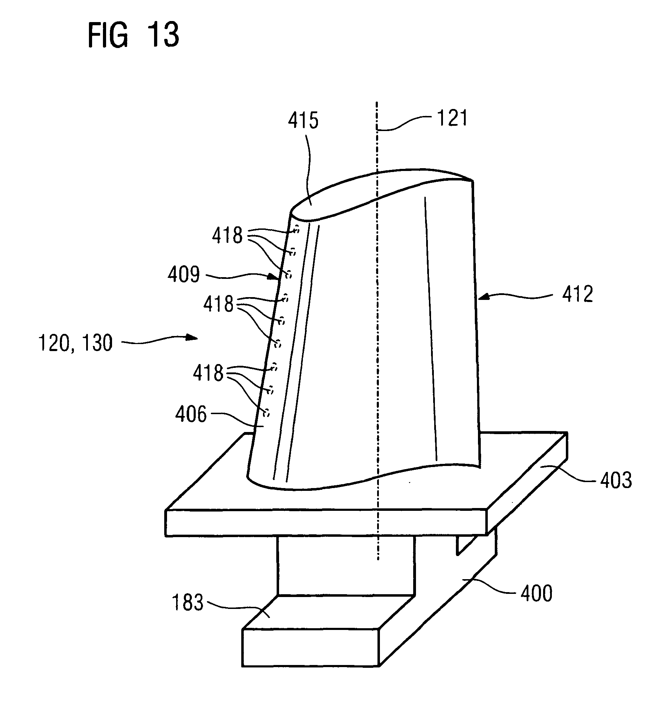

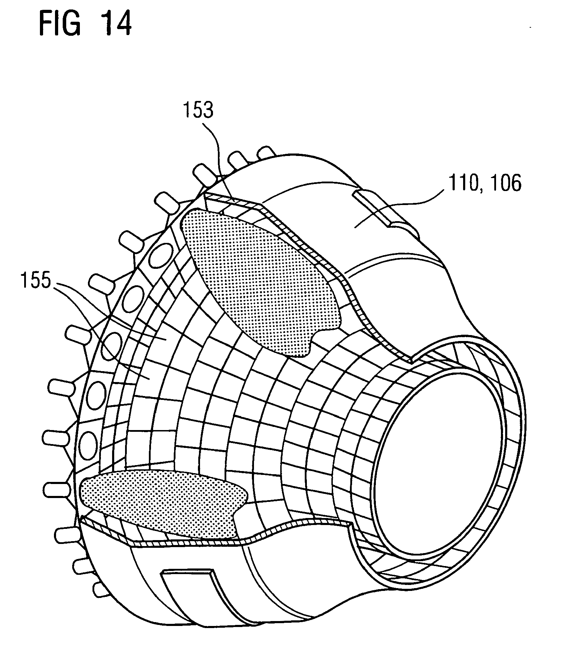

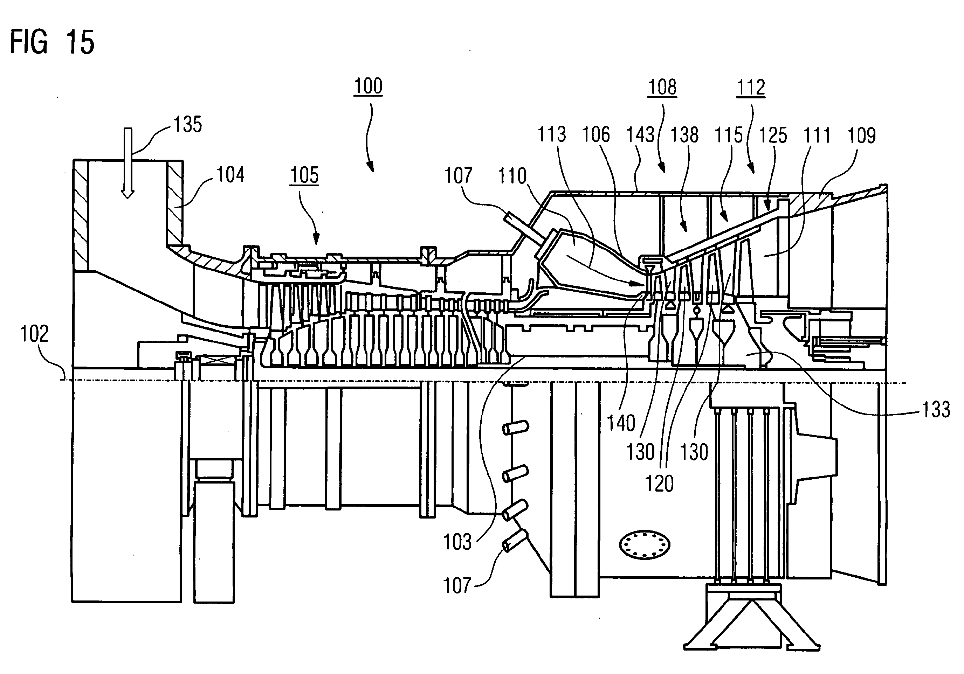

Figur 1 zeigt ein Bauteil 1, bestehend aus einem Substrat 4 mit einer Oberfläche 10, das beispielsweise eine Vertiefung 7 in dem Substrat 4 aufweist.
Das Bauteil 1 kann ein Bauteil einer Turbine, insbesondere einer Dampf- oder Gasturbine 100 (Fig. 15) sein. Dies sind dann beispielsweise Turbinenschaufeln 120, 130 (Fig. 13), Hitzeschildelemente 155 (Fig. 14) oder sonstige Gehäuseteile 138 (Fig. 15), die beispielsweise aus nickel-, kobalt- und/oder eisenbasierten Superlegierungen bestehen.

Insbesondere beim Wiederaufarbeiten von gebrauchten Bauteilen 1 (Refurbishment), aber auch bei der Neuherstellung müssen Vertiefungen 7, in denen beispielsweise ein Riss oder Fehler vorhanden war, aufgefüllt werden.
Ebenso kann großflächig eine Beschichtung oder Verdickung aufgebracht werden, da das Bauteil 1 beispielsweise in einem bestimmten Bereich nicht oder nicht mehr die erforderliche Dicke oder Wanddicke (bei einem hohlen Bauteil) aufweist.

Die Vertiefung 7 wird mit zumindest einer Fasermatte 13 ausgefüllt.

### Anpassung der Fasermatte an Vertiefung

Die Figuren 1 bis 4 zeigen, wie die zumindest eine Fasermatte 13', 13'', 13''' der Vertiefung 7 angepasst ist.

Die einzige Fasermatte 13 in Figur 1, die einen Querschnitt durch das Substrat 4, die Vertiefung 7 und die Fasermatte 13 darstellt, zeigt, dass die Fasermatte 13 der Form der Vertiefung 7 angepasst ist.
In Figur 2 ist die Vertiefung 7 im Querschnitt beispielsweise trapezförmig ausgebildet und daher ist die Fasermatte 13 vorzugsweise ebenfalls im Querschnitt trapezförmig ausgebildet.

Gemäß der Erfindung (siehe Anspruch 2) können auch mehrere Fasermatten 13', 13'', 13''' in die Vertiefung 7 übereinander und/oder nebeneinander (nicht dargestellt) eingebracht werden (Fig. 3), die verschiedene Maße aufweisen, wobei sie aber in ihrer lateralen Ausdehnung der Vertiefung 7 so angepasst sind, dass die Vertiefung 7 möglichst ganz ausgefüllt wird.
Die Figur 4 zeigt eine Aufsicht auf eine Vertiefung 7, die mit einer einzigen Fasermatte 13 oder mehreren Fasermatten 13', 13'', 13''' aufgefüllt ist. Daraus wird deutlich, dass die Fasermatten 13, 13', 13" auch in ihrer lateralen Ausdehnung der Vertiefung 7 angepasst sind.

### Einbringung von Material in eine Fasermatte

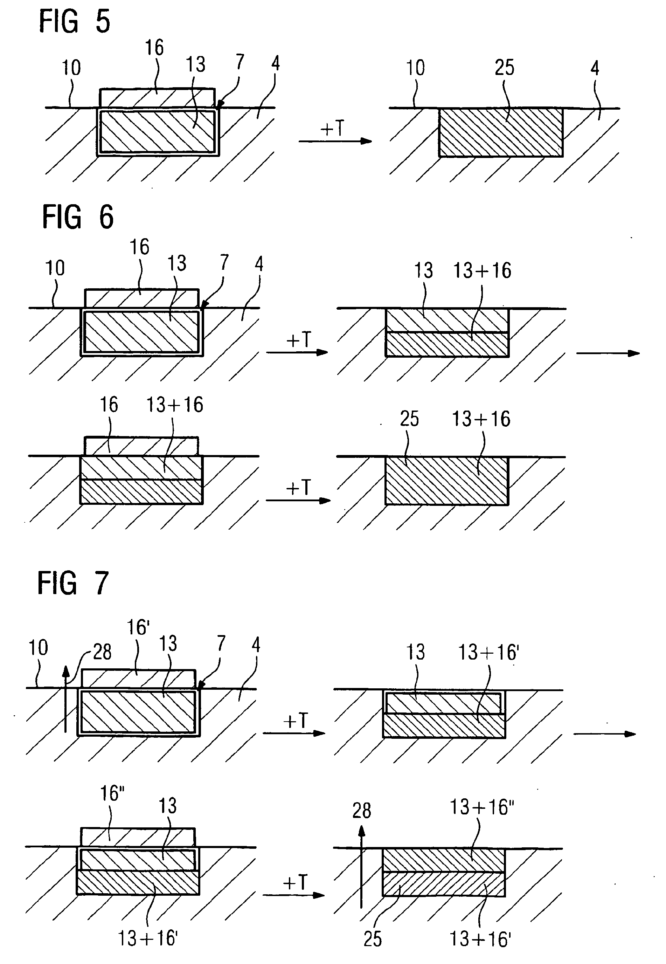

Figur 5 zeigt in einem Beispiel, das nicht unten den erfindungsgemäßen Ansprüchen steht, wie Material 16 in die Vertiefung 7 eingebracht wird.
Zuerst wird die Vertiefung 7 mit einer einzigen Fasermatte 13 aufgefüllt. Danach wird in einem weiteren Verfahrensschritt ein metallisches Material 16, insbesondere ein Material wie oder ähnlich wie das Material des Substrats 4, also beispielsweise eine Superlegierung, beispielsweise in Pasten- oder in Schlickerform, auf die einzige Fasermatte 13 aufgebracht.
Durch eine Wärmebehandlung, also aufgrund einer Temperaturerhöhung (+T), schmilzt und infiltriert das metallische Material 16 die Fasermatte 13 und füllt so die Fasermatte 13 in der Vertiefung 7 vollständig auf und bildet so einen Bereich 25, der eine hohe Festigkeit und eine gute Anbindung an das Bauteil 1 aufweist.

Ebenso kann das eine metallische Material 16 einer Zusammensetzung in zwei oder mehreren Schritten in die einzige Fasermatte 13 eingebracht werden (Fig. 6).
Dies ist z. B. dann nötig, wenn das Material 16 zu niedrig viskos ist und zu stark auf Bereiche der Oberfläche 10 gelangt, die nicht mit metallischem Material 16 versehen werden sollen.
Daher wird nur ein Teil des Materials 16, das notwendig ist, um die Vertiefung 7 und die Fasermatte 13 vollständig aufzufüllen, auf die einzige Fasermatte 13 aufgebracht und durch eine Wärmebehandlung infiltriert. Dabei ist dann in einem unteren Bereich der Fasermatte 13 diese mit metallischem Material 16 aufgefüllt.
Gemäß der Erfindung (siehe Anspruch 1), in einem zweiten oder weiteren Verfahrensschritt wird weiteres Material 16 auf die Fasermatte 13 aufgebracht und durch eine Wärmebehandlung wird wiederum das Material 16 in den restlichen aufzufüllenden Bereich der Fasermatte 13 eingebracht, sodass in einem letzten Verfahrensschritt die Vertiefung 7 und die Fasermatte 13 vollständig mit Material aufgefüllt ist (Fig. 6)
Dieses schrittweise Auffüllen der einzigen Fasermatte 13 wird auch dazu benutzt, um einen Gradienten in der Zusammensetzung des metallischen Materials 16', 16'' zu erreichen (siehe Anspruch 3). Ein solcher Gradient kann beispielsweise bei einem Schmelzpunkterniedriger vorliegen, der beispielsweise Bestandteil des Materials 16', 16'' ist (Fig. 7).
So weist beispielsweise der untere Bereich der Fasermatte 13 einen höheren Gehalt an zumindest einem Schmelzpunkterniedriger, beispielsweise Bor, Silizium, Titan, Hafnium und/oder Zirkon auf, um eine gute Anbindung an das Substrat 4 zu erreichen. Nach außen hin wird der Anteil an dem Schmelzpunkterniedriger erniedrigt oder ist nicht mehr vorhanden, um im äußeren Bereich eine höhere mechanische Festigkeit zu erreichen. Hier liegt also ein Gradient des Schmelzpunkterniedrigers vor, der in einer Richtung 28 von innen nach außen verläuft.
Vorzugsweise wird ein einziger Schmelzpunkterniedriger und dabei vorzugsweise Bor verwendet. Ebenso kann ein Gradient eines oder mehrerer anderer Bestandteile des metallischen Materials, also auch einer Legierung, erzeugt werden.

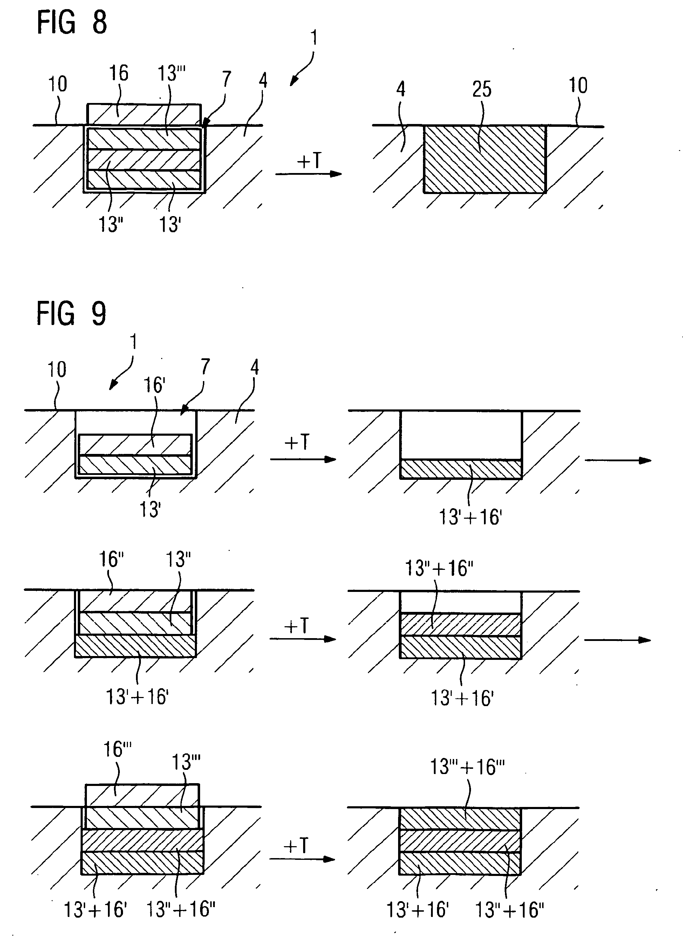

Einbringung von Material in mehrere Fasermatten Gemäß der Erfindung (siehe Anspruch 2) wird die Vertiefung 7 des Bauteils 1 mit mehreren Fasermatten 13', 13'', 13''' aufgefüllt und mit einem einzigen metallischen Material 16, wie in Figur 5 oder in Figur 6 schon erläutert, infiltriert und aufgefüllt werden (Fig. 8).

Gemäß der Erfindung (siehe Ansprüche 2 und 3) wird bei Verwendung von mehreren Fasermatten 13', 13'', 13''' das Material schrittweise eingebracht (Fig. 9).
Dabei wird zuerst die erste Fasermatte 13' in die Vertiefung 7 eingebracht und ein erstes metallisches Material 16' wird aufgebracht und in die Fasermatte 13' infiltriert.
Danach wird auf die mit metallischem Material 16' aufgefüllte Fasermatte 13' die zweite oder weitere Fasermatte 13' ' aufgebracht und mit einem metallischen Material aufgefüllt, das dasselbe ist wie im ersten Schritt 16', oder mit einem zweiten Material 16' ', das sich von dem ersten Material 16' unterscheidet. Damit kann wiederum, wie schon oben beschrieben, ein Konzentrationsgradient in der Zusammensetzung erzielt werden.

### Auffüllen der Vertiefung ohne Infiltration (nicht Teil der Erfindung, die in den Ansprüchen definiert ist)

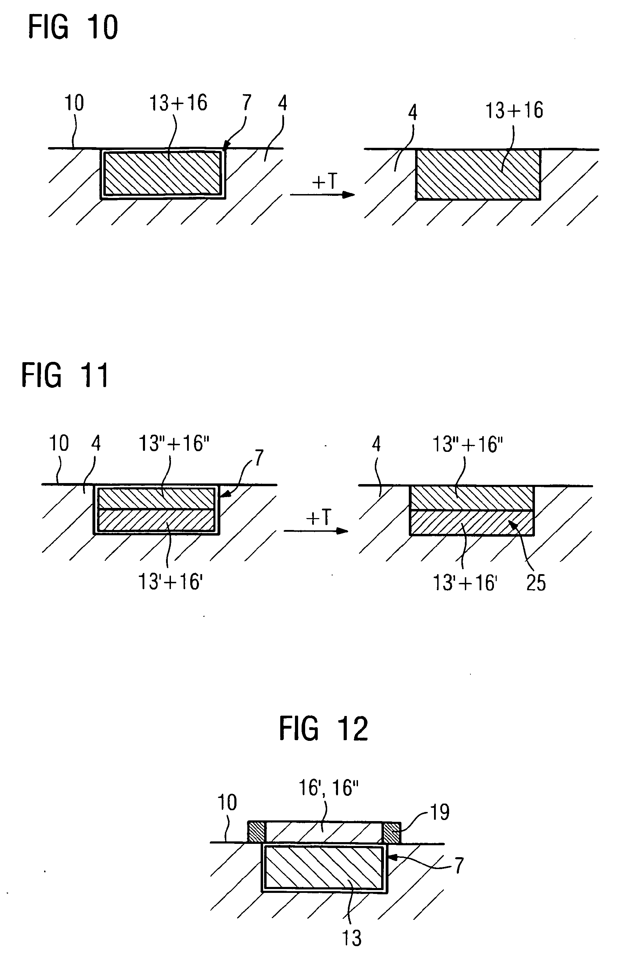

Ebenso kann in der einzigen Fasermatte 13 vorab schon das eine metallische Material 16 oder mehrere metallische Materialien 16', 16' ' vorhanden sein, indem es durch einen Schlicker oder durch Aufschmelzen schon in die Fasermatte 13 infiltriert wurde. Die so mit metallischem Material 16 aufgefüllte Fasermatte 13 wird in die Vertiefung 7 eingebracht und durch die Wärmebehandlung (+T) wird eine gute Verbindung zwischen der Fasermatte 13 und dem Substrat 4 erreicht (Fig. 10).

Dieses Verfahren wird ebenso mit mehreren Fasermatten 13', 13'' durchgeführt , wobei die jeweiligen Fasermatten 13', 13' ' schon ein metallisches Material 16 oder 16' ' aufweisen, die gleich oder verschieden (Fig. 11) voneinander sein können.
Dabei werden die mit metallischem Material aufgefüllten Fasermatten 13', 13" in der Vertiefung 7 gestapelt und durch eine Temperaturerhöhung wird eine gute Anbindung der Fasermatten an das Substrat 4 erreicht.

Die Erfindung ist nicht beschränkt auf drei Fasermatten oder drei verschiedene Materialien.

Die Fasermatten bestehen aus metallischen und/oder keramischen Fasern. Vorzugsweise werden keramische Fasern verwendet. Insbesondere können auch Borfasern verwendet werden.

Besonders vorteilhaft ist es, wenn in einem äußeren Bereich der Fasermatte 13, 13', 13'', 13''' ein Stop-Off-Bereich 19 vorhanden ist (Fig. 12), der verhindert, dass das metallische Material 16, 16' auf die restliche Oberfläche 10 des Substrats 4 gelangt. Dieser Stop-Off-Bereich 19 enthält beispielsweise Nickel und/oder Aluminiumoxid, insbesondere als Pulver in Pastenform.

### Faser (nicht Teil der Erfindung, die in den Ansprüchen definiert ist)

Die Faser, aus der die Fasermatte 13, 13', 13'' besteht, ist insbesondere aus einem Polysiloxan-Harz hergestellt. Polysiloxan-Harze sind polymer-keramische Vorstufen der Strukturformel XSiO_{1,5}, wobei X = -CH₃, -CH - CH₂, -C₆Hₛ etc. sein kann. Gezogene Fasern werden thermisch vernetzt, wobei anorganische Bestandteile (Si-O-Si-Ketten) und organische Seitenketten überwiegend aus X nebeneinander vorliegen. Anschlie-ßend werden die Fasern über eine Temperaturbehandlung in Ar, N₂, Luft- oder Vakuum-Atmosphäre bei Temperaturen zwischen 600°C und 1200°C keramisiert. Dabei wird das polymere Netzwerk zersetzt und über thermische Zwischenstufen von amorphen bis zu kristallinen Phasen neu strukturiert, wobei ausgehend von Polysiloxan-Vorstufen ein Si-O-C-Netzwerk entsteht.

Fasern können auch von Vorstufen des Typs Polysilan (Si-Si), Polycarbosilan (Si-C), Polysilazan (Si-N) oder Polybarosilazan (Si-B-C-N) hergestellt werden.
Vorzugsweise enthält das Polysiloxan auch ein weiteres Element, das sich sehr gut an die Silizium- oder Kohlenstoffatome des Polysiloxans anbinden kann. Dies ist z. B. Bor. Dieses Element kann dann in das metallisches Material 16, 16', 16'', 16''' übergehen, mit der die Fasermatte 13, 13', 13'', 13''' aus diesen Fasern infiltriert wird.

Figur 13 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 mittels des erfindungsgemäßen Verfahrens repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 14 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 15 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrA1X kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zum Aufbringen von Material auf ein metallisches Bauteil (1),
bei dem das Material eine einzige Fasermatte (13.) enthält, bei dem eine einzige Fasermatte (13) verwendet wird,
**dadurch gekennzeichnet,**
**dass** ein erstes metallisches Material (16') in die eine Fasermatte (13) infiltriert wird und
**dass** in zumindest einem weiteren Verfahrensschritt zumindest ein weiteres metallisches Material (16'', 16''') in die eine Fasermatte (13) infiltriert wird.

2. Verfahren zum Aufbringen von Material auf ein metallisches Bauteil (1),
wobei das Material zumindest eine Fasermatte (13', 13'', 13''') enthält,
**dadurch gekennzeichnet,**
**dass** zwei oder mehr Fasermatten (13', 13'', 13''') verwendet werden und dass ein einziges metallisches Material (16) in mehreren Schritten in die zwei oder mehr Fasermatten (13', 13'', 13''') infiltriert wird.

3. Verfahren zum Aufbringen von Material auf ein metallisches Bauteil (1),
wobei das Material zumindest eine Fasermatte (13, 13', 13'', 13''') enthält,
**dadurch gekennzeichnet, dass**
zumindest zwei verschiedene metallische Materialien (16', 16'', 16''') in der zumindest einen Fasermatte (13', 13'', 13''') bereits angeordnet sind,
die eine andere chemische Zusammensetzung,
bezüglich eines oder mehrerer Elemente,
aufweisen,
insbesondere bezüglich eines Elements,
sodass ein Konzentrationsgradient in einer Richtung (28) entlang der zumindest einen Fasermatte (13', 13'', 13''') entsteht und
dass die infiltrierten Fasermatten (13', 13'') auf das Substrat (4) aufgebracht werden.

4. Verfahren nach Anspruch 1, 2 oder 3,
**dadurch gekennzeichnet, dass**
das Material in eine Vertiefung (7) eingebracht wird.

5. Verfahren nach Anspruch 4,
**dadurch gekennzeichnet, dass**
die zumindest eine Fasermatte (13, 13', 13'', 13''') in ihrer Ausdehnung der Vertiefung (7) angepasst wird.

6. Verfahren nach Anspruch 3,
**dadurch gekennzeichnet, dass**
eine einzige Fasermatte (13) verwendet wird.

7. Verfahren nach Anspruch 3,
**dadurch gekennzeichnet, dass**
zwei oder mehr Fasermatten (13', 13'', 13''') verwendet werden.

8. Verfahren nach Anspruch 2, 3, 6 oder 7,
**dadurch gekennzeichnet, dass**
zumindest einmal
zumindest ein metallisches Material (16, 16', 16'', 16'''), insbesondere in Pastenform,
auf die zumindest eine Fasermatte (13, 13', 13'', 13''') aufgebracht wird
und in die zumindest eine Fasermatte (13, 13', 13'', 13''') infiltriert wird.

9. Verfahren nach Anspruch 6, 7 oder 8,
**dadurch gekennzeichnet, dass**
ein einziges metallisches Material (16) in
eine Fasermatte (13) oder
in zwei oder mehr Fasermatten (13', 13", 13 " ') infiltriert wird.

10. Verfahren nach Anspruch 6, 7 oder 8,
**dadurch gekennzeichnet,**
**dass** ein erstes metallisches Material (16') in eine Fasermatte (13) oder in zwei oder mehr Fasermatten (13', 13' ', 13''') infiltriert wird, und
**dass** in einem weiteren Verfahrensschritt zumindest ein weiteres metallisches Material (16' ', 16' ' ') in die eine Fasermatte (13) oder in die zwei oder mehr Fasermatten (13', 13'', 13''') infiltriert wird.

11. Verfahren nach Anspruch 2, 4, 5, 7, 8 oder 9,
**dadurch gekennzeichnet,**
**dass** eine erste Fasermatte (13') aufgebracht wird,
**dass** ein erstes metallisches Material (16') infiltriert wird, **dass** dann eine zweite Fasermatte (13' ') auf die mit dem ersten Material (16') infiltrierte Fasermatte (13') aufgelegt wird und
mit einem metallischen Material (16'),
insbesondere mit einem zweiten metallischen Material (16"), infiltriert wird.

12. Verfahren nach Anspruch 3 oder 4,
**dadurch gekennzeichnet, dass**
ein metallisches Material (16, 16', 16'', 16' ' ') bereits in einer Fasermatte (13) oder in zwei oder mehr Fasermatten (13', 13'', 13''') angeordnet ist,
bevor es auf das Bauteil (1) aufgebracht wird.

13. Verfahren nach Anspruch 1, 3, 8, 10, 11 oder 12,
**dadurch gekennzeichnet, dass**
zumindest zwei verschiedene metallische Materialien (16', 16'', 16''') in der zumindest einen Fasermatte (13, 13', 13'', 13''') angeordnet sind oder infiltriert werden,
die eine andere chemische Zusammensetzung,
bezüglich eines oder mehrerer Elemente,
aufweisen,
insbesondere bezüglich eines Elements,
sodass ein Konzentrationsgradient in einer Richtung (28) entlang der zumindest einen Fasermatte (13, 13', 13'', 13"') entsteht.

14. Verfahren nach einem der Ansprüche 7 bis 13,
**dadurch gekennzeichnet, dass**
die Fasern der zumindest zwei Fasermatten (13', 13' ', 13' ' ') unterschiedliche Konzentrationen zumindest eines Elements aufweisen,
sodass beim Übereinanderlegen von mehreren Fasermatten (13', 13'', 13' ' ') ein Konzentrationsgradient dieses Elements erzeugt wird.

15. Verfahren nach Anspruch 1, 8, 10, 11, 12, 13 oder 14,
**dadurch gekennzeichnet, dass**
zumindest ein Schmelzpunkterniedriger
auf oder in den Fasern der zumindest einen Fasermatte (13, 13', 13", 13"')
oder in dem zumindest einen metallischen Material (16, 16', 16'', 16''') enthalten ist.

16. Verfahren nach Anspruch 13 oder 15,
**dadurch gekennzeichnet, dass**
ein Gradient in der Konzentration zumindest eines Schmelzpunkterniedrigers erzeugt wird.

17. Verfahren nach Anspruch 16,
**dadurch gekennzeichnet, dass**
ein Gradient in der Konzentration eines einzigen Schmelzpunkterniedrigers vorhanden ist.

18. Verfahren nach Anspruch 15, 16 oder 17,
**dadurch gekennzeichnet, dass**
der Schmelzpunkterniedriger Bor ist.

19. Verfahren nach Anspruch 8 bis 13 oder 16 bis 18,
**dadurch gekennzeichnet, dass**
das metallische Material (16, 16', 16'', 16''') in Pastenform oder Schlickerform aufgebracht wird.

20. Verfahren nach einem der vorherigen Ansprüche,
**dadurch gekennzeichnet, dass**
eine Wärmebehandlung durchgeführt wird,
die zur Infiltration der Fasermatten (13, 13', 13", 13''') und/oder
zur Anbindung des metallischen Materials (16, 16', 16'', 16''') an das metallische Bauteil (1) und an die Fasermatten (13, 13', 13", 13"') führt.

21. Verfahren nach einem der vorherigen Ansprüche,
**dadurch gekennzeichnet, dass**
zumindest ein Stop-Off-Bereich (19) vorhanden ist,
der verhindert,
dass das metallische Material (16, 16', 16'', 16''') auf andere Bereiche der Oberfläche (10) des Bauteils (1) gelangt,
auf denen kein Material aufgebracht werden soll.

22. Verfahren nach Anspruch 21,
**dadurch gekennzeichnet, dass**
der zumindest eine Stop-Off-Bereich (19) am äußeren Randbereich einer Fasermatte (13, 13', 13' ', 13''') vorhanden ist.

23. Verfahren nach Anspruch 21 oder 22,
**dadurch gekennzeichnet, dass**
die Stop-Off-Bereiche (19) zumindest teilweise Aluminiumoxid und/oder Nickel enthalten.

24. Verfahren nach Anspruch 1, 6 oder 7,
**dadurch gekennzeichnet, dass**
die Fasern der zumindest einen Fasermatte (13, 13', 13' ', 13''') aus Keramik und/oder Metall sind.

25. Verfahren nach Anspruch 1, 6, 7, 14 oder 24,
**dadurch gekennzeichnet, dass**
Borfasern verwendet werden.

26. Verfahren nach Anspruch 1,
**dadurch gekennzeichnet,**
**dass** das Bauteil (1) aus einer eisen-, nickel- oder kobaltbasierten Superlegierung besteht, und
**dass** das Bauteil (1) ein Bauteil einer Strömungsmaschine, insbesondere einer Gasturbine (120) oder Dampfturbine ist, wie eine Turbinenschaufel (120, 130).

27. Verfahren nach Anspruch 1 oder 26,
**dadurch gekennzeichnet, dass**
mit dem Verfahren Material auf eine neu hergestellte oder wiederaufgearbeitete Turbinenschaufel oder andere Bauteile einer Turbine,
insbesondere einer Gasturbine (100) aufgebracht wird.

## Claims

1. Process for applying material to a metallic component (1),
in which the material includes a single fiber mat (13),
in which a single fiber mat (13) is used,
**characterized**
**in that** a first metallic material (16') is made to infiltrate into the one fiber mat (13), and
**in that** in at least one further process step at least one further metallic material (16'', 16''') is made to infiltrate into the one fiber mat (13).

2. Process for applying material to a metallic component (1), wherein the material includes at least one fiber mat (13', 13'', 13'''),
**characterized in that**
two or more fiber mats (13', 13'', 13''') are used and
**in that** a single metallic material (16) is made to infiltrate into the two or more fiber mats (13', 13'', 13''') in a plurality of steps.

3. Process for applying material to a metallic component (1), wherein the material includes at least one fiber mat (13, 13', 13'', 13'''),
**characterized in that**
at least two different metallic materials (16', 16'', 16''') are already arranged in the at least one fiber mat (13', 13'', 13'''),
which have a different chemical composition,
with respect to one or more elements,
in particular with respect to one element,
so that a concentration gradient is formed in a direction (28) along the at least one fiber mat (13', 13'', 13'''), and
**in that** the infiltrated fiber mats (13', 13'') are applied to the substrate (4).

4. Process according to Claim 1, 2 or 3,
**characterized in that**
the material is introduced into a recess (7).

5. Process according to Claim 4,
**characterized in that**
the size of the at least one fiber mat (13, 13', 13'', 13''') is adapted to the size of the recess (7).

6. Process according to Claim 3,
**characterized in that**
a single fiber mat (13) is used.

7. Process according to Claim 3,
**characterized in that**
two or more fiber mats (13', 13'', 13''') are used.

8. Process according to Claim 2, 3, 6 or 7,
**characterized in that**
at least once,
at least one metallic material (16, 16', 16'', 16'''),
in particular in paste form,
is applied to the at least one fiber mat (13, 13', 13'', 13''') and is made to infiltrate into the at least one fiber mat (13, 13', 13'', 13''').

9. Process according to Claim 6, 7 or 8,
**characterized in that**
a single metallic material (16) is made to infiltrate into one fiber mat (13) or
into two or more fiber mats 913', 13'', 13''').

10. Process according to Claim 6, 7 or 8,
**characterized**
**in that** a first metallic material (16') is made to infiltrate into one fiber mat (13) or into two or more fiber mats (13', 13'', 13'''), and
**in that** in a further process step at least one further metallic material (16'', 16''') is made to infiltrate into the one fiber mat (13) or into the two or more fiber mats (13', 13'', 13''').

11. Process according to Claim 2, 4, 5, 7, 8 or 9,
**characterized**
**in that** a first fiber mat (13') is applied,
**in that** a first metallic material (16') is made to infiltrate,
**in that** then a second fiber mat (13'') is placed onto the fiber mat (13') which has been infiltrated with the first material (16'), and
is infiltrated with a metallic material (16'),
in particular with a second metallic material (16'').

12. Process according to Claim 3 or 4,
**characterized in that**
a metallic material (16, 16', 16'', 16''') is already arranged in one fiber mat (13) or in two or more fiber mats (13', 13", 13''')
before it is applied to the component (1).

13. Process according to Claim 1, 3, 8, 10, 11 or 12,
**characterized in that**
at least two different metallic materials (16', 16'', 16''') are arranged in or made to infiltrate into the at least one fiber mat (13, 13', 13'', 13'''),
which metallic materials have a different chemical composition, with regard to one or more elements,
in particular with regard to one element,
so that a concentration gradient is produced in a direction (28) along the at least one fiber mat (13, 13', 13'', 13''').

14. Process according to one of Claims 7 to 13,
**characterized in that**
the fibers of the at least two fiber mats (13', 13'', 13''') have different concentrations of at least one element,
so that when a plurality of fiber mats (13', 13'', 13''') are placed on top of one another a concentration gradient of this element is produced.

15. Process according to Claim 1, 8, 10, 11, 12, 13 or 14,
**characterized in that**
at least one agent for reducing the melting point
is contained on or in the fibers of the at least one fiber mat (13, 13', 13'', 13''')
or in the at least one metallic material (16, 16', 16'', 16''').

16. Process according to Claim 13 or 15,
**characterized in that**
a gradient is produced in the concentration of at least one agent for reducing the melting point.

17. Process according to Claim 16,
**characterized in that**
there is a gradient in the concentration of a single agent for reducing the melting point.

18. Process according to Claim 15, 16 or 17,
**characterized in that**
the agent for reducing the melting point is boron.

19. Process according to Claim 8 to 13 or 16 to 18,
**characterized in that**
the metallic material (16, 16', 16'', 16''') is applied in paste form or in slurry form.

20. Process according to one of the preceding claims,
**characterized in that**
a heat treatment is carried out,
which leads to infiltration of the fiber mats (13, 13', 13'', 13''') and/or
to attaching of the metallic material (16, 16', 16'', 16''') to the metallic component (1) and to the fiber mats (13, 13', 13'', 13''').

21. Process according to one of the preceding claims,
**characterized in that**
there is at least one stop-off region (19),
which prevents
the metallic material (16, 16', 16'', 16''') from reaching other regions of the surface (10) of the component (1),
to which no material is to be applied.

22. Process according to Claim 21,
**characterized in that**
the at least one stop-off region (19) is present at the outer edge region of a fiber mat (13, 13', 13'', 13''').

23. Process according to Claim 21 or 22,
**characterized in that**
the stop-off regions (19) at least partially contain aluminum oxide and/or nickel.

24. Process according to Claim 1, 6 or 7,
**characterized in that**
the fibers of the at least one fiber mat (13, 13', 13'', 13''') are made from ceramic and/or metal.

25. Process according to Claim 1, 6, 7, 14 or 24,
**characterized in that**
boron fibers are used.

26. Process according to Claim 1,
**characterized**
**in that** the component (1) consists of an iron-base, nickel-base or cobalt-base superalloy, and
**in that** the component (1) is a component of a turbomachine, in particular of a gas turbine (120) or steam turbine, such as a turbine blade or vane (120, 130).

27. Process according to Claim 1 or 26,
**characterized in that**
the process is used to apply material to a newly produced or refurbished turbine blade or vane or other components of a turbine,
in particular of a gas turbine (100).

## Revendications

1. Procédé de dépôt de matière sur un élément (1) métallique,
dans lequel la matière contient une nappe (13) de fibres unique
dans lequel on utilise une nappe (13) de fibres unique,
**caractérisé**
**en ce que** l'on infiltre une première matière (16') métallique dans la une nappe (13) de fibres ; et
**en ce que**, dans au moins un autre stade du procédé, on infiltre au moins une autre matière (16'', 16''') métallique dans la une nappe (13) de fibres.

2. Procédé de dépôt de matière sur un élément (1) métallique,
dans lequel la matière contient au moins une nappe (13', 13'', 13''') de fibres,
**caractérisé**
**en ce que** l'on utilise deux ou plusieurs nappes (16', 16'', 16''') de fibres ; et
**en ce que** l'on infiltre une matière (16) métallique unique en plusieurs stades dans deux ou plusieurs nappes (13', 13'', 13''') de fibres.

3. Procédé de dépôt de matière sur un élément (1) métallique,
dans lequel la matière contient au moins une nappe (13, 13', 13'', 13''') de fibres,
**caractérisé**
**en ce que** l'on dispose déjà au moins deux matières (16', 16'', 16''') métalliques différentes dans la au moins une nappe (13', 13'', 13''') de fibres,
qui ont une composition chimique autre en ce qui concerne un élément ou plusieurs éléments,
notamment en ce qui concerne un élément,
de manière à créer un gradient de concentration dans une direction (28) le long de la moins une nappe (13', 13", 13''') de fibres, et
**en ce que** l'on dépose les nappes (13', 13'') de fibres infiltrées sur le substrat (4).

4. Procédé suivant la revendication 1, 2 ou 3,
**caractérisé**
**en ce que** l'on introduit la matière dans une cavité (7).

5. Procédé suivant la revendication 4,
**caractérisé**
**en ce que** l'on adapte l'étendue de la nappe (13, 13', 13'', 13''') de fibres à la cavité.

6. Procédé suivant la revendication 3,
**caractérisé**
**en ce que** l'on utilise une nappe (13) de fibres unique.

7. Procédé suivant la revendication 3,
**caractérisé**
**en ce que** l'on utilise deux ou plusieurs nappes (13', 13'', 13''') de fibres.

8. Procédé suivant la revendication 2, 3, 6 ou 7,
**caractérisé**
**en ce qu'**au moins une fois
on dépose au moins une matière (16, 16', 16'', 16''') métallique, notamment sous forme de pâte,
sur la au moins une nappe (13, 13', 13'', 13''') de fibres,
et on l'infiltre dans la au moins une nappe (13, 13', 13'', 13''') de fibres.

9. Procédé suivant la revendication 6, 7 ou 8,
**caractérisé**
**en ce que** l'on infiltre une matière (16) métallique unique dans une nappe (13) de fibres ou
dans deux ou plusieurs nappes (13', 13'', 13''') de fibres.

10. Procédé suivant la revendication 6, 7 ou 8,
**caractérisé**
**en ce que** l'on infiltre une première matière (16') métallique dans une nappe (13) de fibres ou dans deux ou plusieurs nappes (13', 13'', 13''') de fibres, et
**en ce que** l'on infiltre dans un autre stade du procédé au moins une autre matière (16'', 16''') métallique dans la une nappe (13) de fibres ou dans les deux ou plusieurs nappes (13', 13'', 13''') de fibres.

11. Procédé suivant la revendication 2, 4, 5, 7, 8 ou 9,
**caractérisé**
**en ce que** l'on dépose une première nappe (13) de fibres,
**en ce que** l'on infiltre une première matière (16') métallique,
**en ce qu'**ensuite on met une deuxième nappe (13'') de fibres sur la nappe (13') de fibres infiltrée par la première matière (16'), et
on infiltre par une deuxième matière (16') métallique,
notamment par une deuxième matière (16'') métallique.

12. Procédé suivant la revendication 3 ou 4,
**caractérisé**
**en ce que** l'on met une matière (16, 16', 16'', 16''') métallique déjà dans une nappe (13) de fibres ou dans deux ou plusieurs nappes (13', 13'', 13''') de fibres,
avant de la déposer sur l'élément (1).

13. Procédé suivant la revendication 1, 3, 8, 10, 11 ou 12,
**caractérisé**
**en ce que** l'on met ou on infiltre au moins deux matières (16', 16'', 16''') métalliques différentes dans la au moins une nappe (13, 13', 13'', 13''') de fibres,
qui ont une composition chimique autre en ce qui concerne un ou plusieurs éléments,
notamment en ce qui concerne un élément,
de manière à créer un gradient de concentration dans une direction (28) le long de la au moins une nappe (13, 13', 13'', 13''') de fibres.

14. Procédé suivant l'une des revendications 7 à 13,
**caractérisé**
**en ce que** les fibres des au moins deux nappes (13', 13'', 13''') de fibres ont des concentrations différentes d'au moins un élément,
de sorte qu'en superposant plusieurs nappes (13', 13'', 13''') de fibres on produit un gradient de concentration de cet élément.

15. Procédé suivant la revendication 1, 8, 10, 11, 12, 13 ou 14,
**caractérisé**
**en ce qu'**au moins un agent abaissant le point de fusion est contenu
sur ou dans les fibres de la au moins une nappe (13, 13', 13'', 13''') de fibres,
ou dans la au moins une matière (16, 16', 16'', 16''') métallique.

16. Procédé suivant la revendication 13 ou 15,
**caractérisé**
**en ce que** l'on produit un gradient de concentration d'au moins un agent abaissant le point de fusion.

17. Procédé suivant la revendication 16,
**caractérisé**
**en ce qu'**il y a un gradient de concentration d'un agent unique abaissant le point de fusion.

18. Procédé suivant la revendication 15, 16 ou 17,
**caractérisé**
**en ce que** l'agent abaissant le point de fusion est le bore.

19. Procédé suivant l'une des revendications 8 à 13 ou 16 à 18,
**caractérisé**
**en ce que** l'on dépose la matière (16, 16', 16'', 16''') métallique sous forme de pâte ou sous forme d'une barbotine.

20. Procédé suivant l'une des revendications précédentes,
**caractérisé**
**en ce que** l'on effectue un traitement thermique,
qui provoque l'infiltration des nappes (13, 13', 13'', 13''') de fibres et/ou
la fixation de la matière (16, 16', 16'', 16''') métallique sur l'élément (1) métallique et sur les nappes (13, 13', 13'', 13''') de fibres.

21. Procédé suivant l'une des revendications précédentes,
**caractérisé**
**en ce qu'**il y a au moins une zone (19) de stop-off,
qui empêche
que la matière (16, 16', 16'', 16''') métallique arrive sur d'autres zones de la surface (10) de l'élément (1),
sur lesquelles il ne faut pas déposer de matière.

22. Procédé suivant la revendication 21,
**caractérisé**
**en ce que** la au moins une zone (19) de stop-off est présente sur la partie marginale extérieure d'une nappe (13, 13', 13'', 13''') de fibres.

23. Procédé suivant la revendication 21 ou 22,
**caractérisé**
**en ce que** les zones (19) de stop-off contiennent au moins en partie de l'oxyde d'aluminium et/ou du nickel.

24. Procédé suivant la revendication 1, 6 ou 7,
**caractérisé**
**en ce que** les fibres de la au moins une nappe (13, 13', 13'', 13''') de fibres sont en céramique et/ou en métal.

25. Procédé suivant la revendication 1, 6, 7, 14 ou 24,
**caractérisé**
**en ce que** l'on utilise des fibres de bore.

26. Procédé suivant la revendication 1,
**caractérisé**
**en ce que** l'élément (1) est en un superalliage à base de fer, de nickel ou de cobalt, et
**en ce que** l'élément (1) est un élément d'une turbomachine,
notamment d'une turbine (120) à gaz ou d'une turbine à vapeur comme une aube (120, 130) de turbine.

27. Procédé suivant la revendication 1 ou 26,
**caractérisé**
**en ce que** l'on dépose par le procédé de la matière sur une aube de turbine ou d'autres éléments d'une turbine, notamment d'une turbine (100) à gaz, nouvellement produits ou retraités.
